# FASCICULE DE BREVET EUROPEEN

(11) **EP 1 940 749 B1**
(45) Date de publication et mention de la délivrance du brevet: **02.12.2009**
(21) Numéro de dépôt: 06831280.0
(22) Date de dépôt: 23.10.2006
(51) Int. Cl.: C03C 13/02, C03C 3/087

(54) **COMPOSITION DE VERRE RESISTANT AUX ALCALIS ET AUX ACIDES POUR LA FABRICATION DE FILS DE VERRE**
ALKALI- UND SÄUREBESTÄNDIGE GLASZUSAMMENSETZUNG ZUR HERSTELLUNG VON GLASFASERN
ALKALI AND ACID-RESISTANT GLASS COMPOSITION FOR PRODUCING GLASS FIBRES

(30) Priorité: 28.10.2005 FR 0553288
(43) Date de publication de la demande: 09.07.2008
(73) Titulaire: Saint-Gobain Vetrotex France S.A., 73000 Chambéry (FR)
(72) Inventeur: LECOMTE, Emmanuel, F-93000 Bobigny (FR); DALLIES, Eric, F-73490 La Ravoire (FR); BERTHEREAU, Anne, F-73190 Challes Les Eaux (FR)
(74) Mandataire: Joly, Jean-Jacques
(86) Numéro de dépôt international: PCT/FR2006/051085
(87) Numéro de publication internationale: WO 2007/048965

(56) Documents cités:
- FR-A- 2 451 347
- GB-A- 2 009 141
- GB-A- 2 071 081

## Description

L'invention concerne une composition de verre résistant aux alcalis et aux acides pour la réalisation de fils de verre destinés au renforcement de matières inorganiques ou organiques, les fils de verre obtenus et les produits renforcés (ou composites) renfermant de tels fils.

Il est connu depuis longtemps d'utiliser des fils de verre alcali-résistant pour renforcer des matières fortement basiques, par exemple à base de ciment. Cependant, lorsque les fils de verre sont mélangés au ciment, ceux-ci sont progressivement dégradés et arrivent à se rompre. Ainsi dégradés, les fils de verre n'assurent plus correctement leur fonction de renforcement: les propriétés mécaniques de la matière renforcée, notamment la résistance en traction et la résistance en flexion sont diminuées ce qui affecte sa solidité.

Classiquement, la résistance aux alcalis est obtenue en ajoutant de l'oxyde de zirconium ZrO₂ dans la composition de verre. Toutefois, l'ajout de ZrO₂ augmente sensiblement la viscosité du verre et élève la température de formage (c'est-à-dire la température à laquelle le verre a une viscosité égale à 10³ poises, notée TLog η=3) ce qui a pour conséquence de détériorer la filière à partir de laquelle les filaments de verre sont obtenus et étirés mécaniquement avant d'être rassemblés en fil(s).

En outre, l'introduction de ZrO₂ dans la composition de verre a pour effet d'augmenter la température au liquidus du verre (c'est-à-dire la température à laquelle apparaissent les premiers cristaux lorsque le verre en fusion est lentement refroidi, noté T_{liq}) et par là même d'accroître le risque de dévitrification du verre lors de la fusion et de la formation des fils en provoquant dans ce cas la rupture des filaments.

Pour ces raisons, les compositions de verre alcali-résistant connues contiennent en général une quantité relativement faible de ZrO₂ et d'autres composés pour permettre la formation des fils de verre dans des conditions acceptables.

Par exemple; des compositions de verre contenant 8 à 25 % en poids de ZrO₂ sont décrites dans SU-A-151298, DD-A-293105 et US-B-6 627 569.

D'autres compositions de verre basées sur l'ajout de TiO₂ pour améliorer les conditions de fibrage sont décrites dans WO-A-92/06931, US-B-5 064 785, CN-A-1500763 et CN-A-1046147.

US-B-4 345 037 décrit des fibres de verre résistantes aux alcalis pour le renforcement du ciment qui contiennent 0,1 à 1 % en poids de Cr₂O₃ et 0,5 à 16 % en poids d'au moins un oxyde de terre rare et de TiO₂. La résistance aux alcalis est ici obtenue par le biais d'une fusion dans des conditions non oxydantes, de sorte qu'une proportion substantielle du chrome est sous la forme de chrome trivalent. Ces fibres sont cependant susceptibles de contenir du chrome hexavalent connu pour son caractère toxique envers les êtres vivants.

Par ailleurs, il est connu d'utiliser des fils de verre contenant du ZrO₂ pour renforcer des matières plastiques du type polyester.

Dans GB-A-96 5018, il est décrit la fabrication de fils de verre à forte transmission lumineuse fondée sur la combinaison de 3 à 10 % de ZrO₂, 4 à 12 % d'Al₂O₃ et 3 à 10 % de CaO. Les fils de verre possèdent en outre une bonne résistance hydrolytique et aux acides.

Le but de la présente invention est de fournir une composition de verre permettant la réalisation de fils de verre pouvant être utilisés indifféremment pour renforcer des matières basiques, notamment à base de ciment, et des matières plastiques destinées devant entrer en contact avec des acides, la composition pouvant être mise en oeuvre dans les conditions usuelles des installations de fibrage existantes et à faible coût.

Ce but est atteint grâce à la composition de verre résistant aux bases et aux acides pour la fabrication de fils de verre, cette composition étant caractérisée en ce qu'elle comprend les constituants suivants dans les limites définies ci-après exprimées en pourcentages pondéraux :

| | |
|---|---|
| SiO₂ | ≥ 58 %, de préférence < 65 % |
| ZrO₂ | 15 - 20 % |
| R₂O (R = Na, K ou Li) | ≥14 % |
| K₂O | ≤ 0,1 %, de préférence ≤ 0,05 %, |
| RO (R = Mg, Ca ou Sr) | 2,5-6% |
| MgO | ≤ 4% |
| TiO₂ | >1 et ≤4 % |

la composition étant en outre exempte de F, contenant moins de 1 % d'impuretés (Al₂O₃, Fe₂O3 et Cr₂O₃) et satisfaisant les relations suivantes :

   ZrO₂ + TiO₂≥17 %

   ZrO₂/TiO₂≥6

Selon une caractéristique de l'invention, la composition de verre est caractérisée en ce que la différence entre la température de formage des fils (T_{Log} η=3) et la température au liquidus (T_{liq}) est au moins égale à 60°C, ce qui est suffisant pour que le fibrage du verre s'effectue dans de bonne conditions. De préférence, cette différence est au moins égale à 80°C.

En outre, la température de formage est au plus égale à 1320°C, de préférence est inférieure ou égale à 1310°C, correspondant à une température tout à fait acceptable car ne nécessitant pas de chauffer le verre de manière trop intense et permettant de réduire au minimum l'usure de la filière.

Selon une autre caractéristique de l'invention, la composition de verre satisfait la relation Na₂O / ZrO₂ ≥0,75.

SiO₂ est l'oxyde qui forme le réseau des verres selon l'invention et joue un rôle essentiel pour leur stabilité. Dans le cadre de l'invention, lorsque le taux de SiO₂ est inférieur à 58 %, la viscosité du verre devient trop faible et les risques de dévitrification du verre lors du fibrage sont augmentés. En général, le taux de SiO₂ est maintenu inférieur ou égal à 65%, car au-delà de cette valeur le verre devient très visqueux et difficile à fondre. De préférence, le taux de SiO₂ varie de 59 à 63 %.

ZrO₂ est essentiel pour conférer au verre la résistance aux alcalis et son taux doit par conséquent être au moins égal à 15 %. En outre, ZrO₂ contribue à l'amélioration de la résistance aux acides. De préférence, lorsque le taux de ZrO₂ dépasse 18 %, le taux de TiO₂ est au moins égal à 1 % de manière à obtenir une température au liquidus satisfaisante. Un taux de ZrO₂ supérieur à 20 % augmente le risque de dévitrification lors du fibrage.

Na₂O et Li₂O sont tous deux utilisés comme fondants pour améliorer la fusion du verre en permettant notamment de diminuer la viscosité et d'obtenir une meilleure solubilisation du ZrO₂ dans le verre. De préférence, la teneur en Li₂O est inférieure à 0,5 % de manière à ne pas trop augmenter le prix du verre (la matière première du Li₂O ayant un coût élevé) et de préférence est nulle.

La présence de K₂O en tant que fondant n'est pas souhaitée dans la composition de verre, essentiellement pour des raisons liées au coût élevé de la matière première le contenant qui représente une part importante du prix du verre final. K₂O peut être présent en tant qu'impureté dans les matières premières vitrifiables, à un taux inférieur ou égal à 0,1 %, de préférence inférieur ou égal à 0,05 %. De manière particulièrement préférée, la composition de verre est exempte de K₂O.

Conformément à l'invention, le taux de R₂O est supérieur ou égal à 14 %, de préférence est inférieur à 18 % pour éviter de dégrader la résistance hydrolytique du verre.

MgO, CaO et SrO permettent d'ajuster la viscosité du verre et de contrôler la dévitrification. Le taux de MgO est maintenu inférieur à 4 % afin de conserver une température au liquidus acceptable, en règle générale inférieure à 1220°C, et de préférence ce taux est nul. En règle générale, la composition de verre est dépourvue de SrO.

Le taux de RO est compris entre 2,5 et 6 %. Un taux inférieur à 2,5 % diminue la résistance hydrolytique du verre. Au-delà de 6 %, la solubilité de ZrO₂ dans le verre diminue.

TiO₂ joue un rôle de fluidifiant et contribue à augmenter la résistance aux alcalis et aux acides. Le taux de TiO₂ est supérieur à 1 %. Au-delà de 4 %, le risque de dévitrification s'élève et le verre présente une coloration jaune très prononcée.

La composition de verre est exempte de F, élément indésirable qui génère des émissions polluantes pendant la fusion et corrode les éléments réfractaires du four.

La composition de verre selon l'invention peut contenir jusqu'à 1 % d'impuretés inévitables apportées par les matières premières servant à l'élaboration du verre et/ou provenant des réfractaires du four. Les impuretés sont constituées d'Al₂O₃, d'oxydes de fer (exprimés sous la forme de Fe₂O₃) et de Cr₂O₃. Le taux d'Al₂O₃ est généralement inférieur à 0,5 %. De préférence, le taux de Fe₂O₃ n'excède pas 0,5 % pour ne pas nuire de façon rédhibitoire à la couleur des fils de verre et à la conduite de l'installation de fibrage, en particulier aux transferts de chanteur dans le four. De préférence encore, le taux de Cr₂O₃ est inférieur à 0,05 %, et mieux encore est nul.

A partir de la composition de verre précédemment décrite, les fils de verre sont obtenus selon le procédé suivant : on étire une multiplicité de filets de verre fondu, s'écoulant d'une multiplicité d'orifices disposés à la base d'une ou plusieurs filières, sous la forme d'une ou plusieurs nappes de fils continus, puis on rassemble les filaments en un ou plusieurs fils que l'on collecte sur un support en mouvement. Il peut s'agir d'un support en rotation lorsque les fils sont collectés sous la forme d'enroulements ou d'un support en translation lorsque les fils sont coupés par un organe servant également à les étirer ou lorsque les fils sont projetés par un organe servant à les étirer de façon à former un mat.

Les fils obtenus, éventuellement après d'autres opérations de transformation, peuvent ainsi se présenter sous différentes formes : fils continus ou coupés, tissus, tricots, tresses; rubans ou mats, ces fils étant composés de filaments de diamètre pouvant aller de 5 à 30 micromètres environ.

Le verre fondu qui alimente les filières est obtenu à partir de matières premières pures ou le plus souvent naturelles (c'est-à-dire pouvant contenir des impuretés à l'état de traces), ces matières étant mélangées dans des proportions appropriées, puis étant fondues. La température du verre fondu est réglée de façon traditionnelle de manière à permettre le fibrage et éviter les problèmes de dévitrification. Avant leur rassemblement sous forme de fils, les filaments sont généralement revêtus d'une composition d'ensimage visant à les protéger de l'abrasion et facilitant leur association ultérieure avec les matières à renforcer. La composition d'ensimage peut être une composition aqueuse ou anhydre (contenant moins de 5 % en poids de solvant), par exemple décrite dans WO-A-01/90017 et FR-A-2837818. Le cas échéant, avant et/ou après la collecte, les fils peuvent subir un traitement thermique dans le but de les sécher et/ou de polymériser l'ensimage.

Les fils de verre obtenus peuvent ainsi être utilisés pour renforcer des matières inorganiques, en particulier fortement basiques telles que les matières cimentaires, et des matières organiques, en particulier plastiques.

Les matières inorganiques aptes à être renforcées sont notamment les matières cimentaires telles que le ciment, le béton, le mortier, le gypse, le laitier, les composés formés par réaction de chaux, de silice et d'eau, et les mélanges de ces matières avec d'autres matières, par exemple les mélanges de ciment, de matières polymères et de charges (enduits).

Le renforcement peut se faire directement par incorporation des fils de verre dans la matière cimentaire, ou indirectement à partir de fils de verre préalablement combinés avec une matière organique, par exemple pour former des éléments composites utilisables en tant qu'armature pour le béton armé (« rebars » en anglais).

Les matières organiques aptes à être renforcées par les fils de verre selon l'invention sont des matières plastiques thermoplastiques ou thermodurcissables, de préférence thermodurcissables.

A titre d'exemples de matières thermoplastiques, on peut citer les polyoléfines telles que le polyéthylène, le polypropylène et le polybutylène, les polyesters tels que le polyéthylène téréphtalate et le polybutylène téréphtalate, les polyamides, les polyuréthanes et les mélanges de ces composés.

A titre d'exemples de matières thermodurcissables, on peut citer les polyesters, par exemple les résines vinylester, les résines phénoliques, les résines époxy, les polyacryliques et les mélanges de ces composés. On préfère les résines vinylester, en particulier de type isophtalique, qui résistent mieux à la corrosion.

Comme déjà indiqué précédemment, il est possible d'utiliser les fils de verre sous forme de fils continus (par exemple sous forme de gâteaux ou de stratifils, de grilles, de tissus, ...) ou coupés (par exemple sous forme de non tissés tels que des voiles ou des mats), et leur présentation dépend de la nature de la matière à renforcer et du procédé mis en oeuvre.

Les fils de verre continus selon l'invention peuvent ainsi être utilisés pour la fabrication de corps creux tels que des tuyaux ou des citernes par la technique connue opérant par enroulement filamentaire qui consiste à déposer un renfort, par exemple une nappe de stratifil, imprégné de matière organique sur un mandrin en rotation autour de son axe. De tels corps creux sont notamment destinés à la collecte et à l'évacuation des eaux usées (tuyaux), et au stockage ou au transport de produits chimiques (citernes et conteneurs). Les fils coupés quant à eux conviennent pour le renforcement de peintures ou de mastics, et la réalisation de composites par moulage au contact.

Les enroulements de fils peuvent être utilisés pour réaliser des grilles ou des tissus utilisés en tant qu'éléments anti-fissuration ou anti-sismique dans les matières cimentaires, ou pour la rénovation des ouvrages de génie civil (pont, tunnel, route, ...). Les enroulements peuvent encore être utilisés pour fabriquer des profilés composites par pultrusion, c'est-à-dire par passage d'un renfort imprégné de matière organique au travers d'une filière chauffée. Ces profilés composites sont notamment utilisés comme éléments de construction dans les industries où les matériaux doivent avoir une résistance élevée aux alcalis et aux acides, par exemple les industries chimiques, pétrolières et portuaires.

Les fils de verre sont généralement incorporés dans la matière inorganique ou organique à renforcer en une proportion telle que le verre représente 15 à 80 % en volume du matériau final, de préférence 20 à 60 % en volume.

Dans le composite final, les fils de verre peuvent être les seuls éléments de renforcement de la matière inorganique ou organique, ou ils peuvent être associés à d'autres éléments, tels que des fils métalliques et/ou minéraux, notamment en céramique.

La composition de verre conforme à l'invention permet la réalisation des fils de verre dont la résistance aux alcalis est comparable aux fils de verre utilisés pour le renforcement de matières basiques et la résistance aux acides est améliorée, peut être fibrée dans les installations conventionnelles sans modification des conditions opératoires, et est économique.

Les composites obtenus à partir de ces fils de renforcement présentent de bonnes propriétés mécaniques en milieu corrosif, basique, acide et humide, y compris lorsque celui-ci est susceptible d'évoluer dans le temps, l'amélioration étant visible dans les conditions de corrosion acide.

Les exemples qui suivent permettent d'illustrer l'invention sans toutefois la limiter.

Des fils composés de filaments de verre de 17 µm de diamètre sont obtenus par étirage de filets de verre fondu ayant la composition figurant dans le tableau 1, exprimée en pourcentage pondéraux.

Sur leur trajet, les filaments sont revêtus d'un ensimage aqueux avant d'être rassemblés en fils qui sont ensuite collectés sous forme d'enroulements.

Pour la production de fils de verre de renforcement de matières cimentaires, on utilise un ensimage conventionnel apte à prévenir la fissuration du béton (ensimage anti-crack HD^{®} de Saint-Gobain). Les fils obtenus sont collectés sous la forme de gâteaux.

Pour la réalisation de fils de verre de renforcement de matières plastiques, on utilise un ensimage tel que décrit dans l'exemple 1 du brevet FR 2 809 389. Les fils sont collectés sous la forme de stratifils.

Les fils sont séchés à 130°C pendant 12 heures avant d'être incorporés dans les matières cimentaires ou plastiques pour former des composites.

La mise en oeuvre du fil et les tests mécaniques sur les composites sont décrits ci-après.

### A - renforcement de matières cimentaires

On forme un composite comprenant un fil de verre dont la partie centrale est enchâssée dans un bloc de ciment. Le fil est placé au centre d'un moule de dimensions intérieures : L = 30 mm ; H = 10 mm ; P = 10 mm), puis il est rempli de ciment de composition (en parties en poids) : 75 parties de ciment Portland ; 25 parties de sable et 32 parties d'eau. Le composite est traité dans les conditions suivantes : 20-25°C à 90-100 % d'humidité relative pendant 24 heures.

Le composite est ensuite soumis à un test de vieillissement par immersion dans de l'eau à 80°C pendant 4 jours. Sur le composite, on mesure la contrainte à la rupture du fil en traction, en MPa, conventionnellement nommé « contrainte SIC » (Strand In Cement). La contrainte SIC est représentative de la sensibilité à l'attaque alcaline du verre par le ciment.

Les valeurs de contrainte SIC et le gain (en %) par rapport à l'exemple 11 (Référence) sont donnés dans le tableau 1.

### B - renforcement de matières plastiques

Les fils de verre sont utilisés pour former des plaques composites à fils parallèles conformément à la norme ISO 1268-5. La résine renforcée est une résine polyester isophtalique commercialisée sous la référence « Synolite 1717 » par la société DSM à laquelle on ajoute 1,5 part de durcisseur (référence TRIGONOX HM commercialisé par AKZO) pour 100 parts en poids de résine.

Chaque plaque contient 50 % en volume de verre et a une épaisseur de 3 mm. Les plaques sont ensuite traitées à 80°C pendant 2 heures puis à 120°C pendant 4 heures pour accomplir la réticulation complète de la résine. Les plaques sont séparées en deux séries soumises aux tests suivants :

### a) Résistance en flexion

Sur la première série, on mesure la contrainte à la rupture des plaques en flexion 3 points selon la norme ISO 14125, en MPa, avant et après traitement dans l'eau bouillante pendant 24 heures. La valeur de la contrainte à la rupture en flexion, normalisée pour 100 % de verre, est donnée dans le tableau 1.

La contrainte à la rupture en flexion est représentative de la résistance des fils de verre à l'attaque par l'eau dans des conditions de vieillissement accéléré.

### b) Résistance aux acides

Les plaques de la deuxième série sont protégées au niveau des bords par une couche d'une résine époxy de 1 à 2 mm d'épaisseur, puis chaque plaque est placée sous une contrainte donnée, constante, en flexion trois points dans une solution acide (HCl 1 N ; 25°C). On mesure le temps de rupture du composite dans les conditions de contrainte en flexion (norme ISO 14125) et on trace la courbe de la contrainte à la rupture en flexion en fonction du temps. Sur cette courbe, on détermine la valeur de la contrainte en flexion (« contrainte CSC » - Corrosion Sous Contrainte), en MPa, nécessaire pour obtenir la rupture du composite après 1000 heures de vieillissement.

La mesure de la contrainte CSC est donnée dans le tableau 1.

Les exemples 1 à 6 sont des exemples selon l'invention et les exemples 7 à 11 sont des exemples comparatifs.

Les exemples 7 à 9 correspondent à des compositions de verre présentent un rapport pondéral ZrO₂ / TiO₂ inférieur à 6.

L'exemple 10 correspond à une composition de verre pour la réalisation de fils alcali-résistants pour le renforcement des matières cimentaires (Cem-FIL^{®} commercialisé par Saint-Gobain Vetrotex).

L'exemple 11 correspond à une autre composition à base de K₂O permettant la réalisation de fils de verre alcali-résistant pour le renforcement des matières cimentaires.

Les fils selon l'invention combinent de bonnes propriétés de résistance aux alcalis, notamment une contrainte SIC améliorée par rapport à l'exemple 10 et comparable à l'exemple 11, et une meilleure résistance aux acides.

La différence de température T_{Log} η=₃ - T_{liq} est en outre très supérieure aux valeurs des exemples comparatifs 7 à 9, et du même ordre de grandeur que l'exemple 10.

**TABLEAU 1**

| Exemple | 1 | 2 | 3 | 4 | 5 | 6 | 7 | 8 | 9 | 10 | 11 |
|---|---|---|---|---|---|---|---|---|---|---|---|
| SiO₂(%) | 61,10 | 60,10 | 61,60 | 60,60 | 59,85 | 59,85 | 59,10 | 59,10 | 61,10 | 61,80 | 60,25 |
| ZrO₂ (%) | 17,50 | 17,05 | 17,05 | 18,05 | 19,00 | 18,00 | 18,05 | 18,05 | 17,05 | 16,70 | 19,20 |
| Al₂O₃ | 0,40 | 0,40 | 0,40 | 0,40 | 0,40 | 0,40 | 0,40 | 0,40 | 0,40 | 0,40 | 0,25 |
| Na₂O (%) | 14,00 | 14,45 | 14,45 | 14,45 | 16,00 | 16,05 | 13,45 | 14,45 | 13,45 | 14,80 | 13,95 |
| CaO (%) | 5,00 | 5,75 | 4,25 | 4,25 | 3,00 | 3,00 | 5,75 | 4,75 | 4,75 | 5,80 | 0,60 |
| TiO₂(%) | 2,00 | 2,25 | 2,25 | 2,25 | 1,75 | 2,25 | 3,25 | 3,25 | 3,25 | 0,10 | 1,90 |
| K₂O(%) | - | - | - | - | - | - | - | - | - | - | 2,35 |
| Li₂0 | - | - | - | - | - | - | - | - | - | - | 1,1 |
| ZrO₂ +TiO₂(%) | 19,50 | 19,30 | 19,30 | 20,30 | 20,75 | 20,25 | 21,30 | 21,30 | 20,30 | 17,00 | 21,00 |
| ZrO₂/TiO₂(%) | 9,00 | 8,00 | 8,00 | 8,00 | 11,00 | 8,00 | 5,6 | 5,6 | 5,00 | 167,00 | 10,00 |
| T_{Logη=3} (°C) | 1300 | 1281 | 1300 | 1302 | 1303 | 1283 | 1299 | 1293 | 1280 | 1290 | 1287 |
| T_{liq} (°C) | 1200 | 1190 | 1170 | 1190 | 1210 | n. d. | 1300 | 1270 | 1250 | 1180 | 1140 |
| T_{Log η=3} - T_{liq}(°C) | 100 | 91 | 130 | 112 | 93 | n. d. | -1 | 23 | 30 | 110 | 147 |
| **Résistance aux alcalis** | | | | | | | | | | | |
| Contrainte SIC (MPa) | n. d. | n. d. | n. d. | 425 (+ 21 %) | n. d. | n. d. | n. d. | n. d. | n. d. | 350 | 430 |
| **Vieillissement humide** | | | | | | | | | | | |
| Avant (Mpa) | n. d. | n. d. | n. d. | 2160 | n. d. | n. d. | n. d. | n. d. | n. d. | 2350 | n. d. |
| Après (Mpa) | n. d. | n. d. | n. d. | 960 | n. d. | n. d. | n. d. | n. d. | n. d. | 1110 | n. d. |
| Contrainte flexion résiduelle (%) | n. d. | n. d. | n. d. | 45 | n. d. | n. d. | n. d. | n. d. | n. d. | 47 | n. d. |
| **Résistance aux acides** | | | | | | | | | | | |
| Contrainte CSC (Mpa) | n. d. | n. d. | n. d. | 950 | n. d. | n. d. | n. d. | n. d. | n. d. | 700 | n. d. |

## Revendications

1. Composition de verre résistant aux alcalis et aux acides, notamment pour la réalisation de fils de verre de renforcement, **caractérisée en ce qu'**elle comprend les constituants suivants dans les limites définies ci-après, en pourcentages pondéraux :
| | |
|---|---|
| SiO₂ | ≥58 %, de préférence ≤65 % |
| ZrO₂ | 15-20% |
| R₂O (R = Na, K ou Li) | ≥ 14 % |
| K₂O | ≤0,1 %, de préférence ≤ 0,05 %, |
| RO (R = Mg, Ca ou Sr) | 2,5-6% |
| MgO | ≤4 % |
| TiO₂ | >1 et ≤4% |
la composition étant en outre exempte de F, contenant moins de 1 % d'impuretés (Al₂O₃, Fe₂O₃ et Cr₂O₃) et satisfaisant les relations suivantes :
ZrO₂ + TiO₂ ≥ 17 %
ZrO₂ / TiO₂ ≥ 6

2. Composition selon la revendication 1, **caractérisée en ce qu'**elle satisfait la relation Na₂O / ZrO₂ ≥ 0,75.

3. Composition selon l'une des revendications 1 ou 2, **caractérisée en ce que** la teneur en Li₂O est inférieure à 0,5 % et de préférence est nulle.

4. Composition selon l'une des revendications 1 à 3, **caractérisée en ce que** taux de R₂O est inférieur à 18 %.

5. Composition selon l'une des revendications 1 à 4, **caractérisée en ce qu'**elle est dépourvue de SrO.

6. Composition selon l'une des revendications 1 à 5, **caractérisée en ce qu'**elle présente une différence entre la température de formage des fils (T_{Log} η=3) et la température au liquidus (T_{liq}) au moins égale à 60°C, de préférence au moins égale à 80°C.

7. Composition selon la revendication 6, **caractérisée en ce que** la température de formage est au plus égale à 1320°C, de préférence est inférieure ou égale à 1310°C.

8. Fil de verre destiné au renforcement de matières inorganiques ou organiques, **caractérisé en ce qu'**il est obtenu à partir d'une composition de verre selon l'une quelconque des revendications 1 à 7.

9. Utilisation des fils de verre selon la revendication 8 pour le renforcement de matières inorganiques, en particulier fortement basiques telles que les matières cimentaires, et de matières organiques, en particulier plastiques.

10. Composite de fils de verre et de matière inorganique ou organique, **caractérisé en ce qu'**il comprend des fils de verre selon la revendication 8.

11. Composite selon la revendication 10, **caractérisé en ce que** la matière inorganique est choisie parmi les matières cimentaires telles que le ciment, le béton, le mortier, le gypse, le laitier, et les composés formés par réaction de chaux, de silice et d'eau.

12. Composite selon la revendication 10, **caractérisé en ce que** la matière organique est choisie parmi les matières plastiques thermoplastiques ou thermodurcissables.

13. Composite selon la revendication 12, **caractérisé en ce que** la matière thermoplastique est choisie parmi les polyoléfines, les polyesters, les polyamides, les polyuréthanes et les mélanges de ces composés.

14. Composite selon la revendication 12, **caractérisé en ce que** la matière thermodurcissable est choisie parmi les polyesters, les résines phénoliques, les résines époxy, les polyacryliques et les mélanges de ces composés.

## Claims

1. Glass composition which is resistant to alkalis and to acids, in particular for the preparation of reinforcing glass strands, **characterized in that** it comprises the following constituents within the limits defined below, as percentages by weight:
| | |
|---|---|
| SiO₂ | ≥ 58%, preferably ≤65% |
| ZrO₂ | 15-20% |
| R₂O(R = Na, K or Li) | ≥ 14% |
| K₂O | ≤ 0.1%, preferably ≤ 0.05%, |
| RO (R = Mg, Ca or Sr) | 2.5-6% |
| MgO | ≤ 4% |
| TiO₂ | > 1 and ≤ 4% |
the composition additionally being devoid of F, comprising less than 1% of impurities (Al₂O₃, Fe₂O₃ and Cr₂O₃) and satisfying the following relationships:
ZrO₂ + TiO₂≥ 17%
ZrO₂/TiO₂ ≥ 6

2. Composition according to Claim 1, **characterized in that** it satisfies the relationship Na₂O/ZrO₂ ≥ 0.75.

3. Composition according to either of Claims 1 and 2, **characterized in that** the Li₂O content is less than 0.5% and is preferably zero.

4. Composition according to one of Claims 1 to 3, **characterized in that** the level of R₂O is less than 18%.

5. Composition according to one of Claims 1 to 4, **characterized in that** it is devoid of SrO.

6. Composition according to one of Claims 1 to 5, **characterized in that** it exhibits a difference between the formation temperature of the strands (T_{Log} η=3) and the liquidus temperature (T_{liq}) which is at least equal to 60°C, preferably at least equal to 80°C.

7. Composition according to Claim 6, **characterized in that** the formation temperature is at most equal to 1320°C and is preferably less than or equal to 1310°C.

8. Glass strand intended for reinforcing inorganic or organic materials, **characterized in that** it is obtained from a glass composition according to any one of Claims 1 to 7.

9. Use of the glass strands according to Claim 8 in the reinforcing of inorganic materials, in particular highly basic inorganic materials, such as cementitious materials, and of organic materials, in particular plastics.

10. Composite formed of glass strands and inorganic or organic material, **characterized in that** it comprises glass strands according to Claim 8.

11. Composite according to Claim 10, **characterized in that** the inorganic material is chosen from cementitious materials, such as cement, concrete, mortar, gypsum, slag and the compounds formed by reaction of lime, silica and water.

12. Composite according to Claim 10, **characterized in that** the organic material is chosen from thermoplastics or thermosetting plastics.

13. Composite according to Claim 12, **characterized in that** the thermoplastic is chosen from polyolefins, polyesters, polyamides, polyurethanes and blends of these compounds.

14. The composite according to Claim 12, **characterized in that** the thermosetting material is chosen from polyesters, phenolic resins, epoxy resins, polyacrylics and blends of these compounds.

## Patentansprüche

1. Alkali- und säurebeständige Glaszusammensetzung, insbesondere zur Herstellung von Verstärkungsglasfasern, **dadurch gekennzeichnet, daß** sie folgende Bestandteile in den unten festgelegten, in Gewichtsprozent ausgedrückten Grenzwerten umfaßt:
| | |
|---|---|
| SiO₂ | ≥ 58%, vorzugsweise ≤ 65% |
| ZrO₂ | 15-20% |
| R₂O (R = Na, K oder Li) | ≥ 14% |
| K₂O | ≤ 0,1%, vorzugsweise ≤ 0,05%, |
| RO (R = Mg, Ca oder Sr) | 2,5 - 6% |
| MgO | ≤ 4% |
| TiO₂ | > 1 und ≤ 4% |
wobei die Zusammensetzung ferner frei von F ist, weniger als 1% Verunreinigungen (Al₂O₃, Fe₂O₃ und Cr₂O₃) enthält und die folgenden Beziehungen erfüllt:
ZrO₂ + TiO₂ ≥ 17%
ZrO₂ / TiO₂ ≥ 6

2. Zusammensetzung nach Anspruch 1, **dadurch gekennzeichnet, daß** sie die Beziehung Na₂O / ZrO₂ ≥ 0,75 erfüllt.

3. Zusammensetzung nach einem der Ansprüche 1 oder 2, **dadurch gekennzeichnet, daß** der Gehalt an Li₂O niedriger als 0,5% und vorzugsweise gleich 0 ist.

4. Zusammensetzung nach einem der Ansprüche 1 bis 3, **dadurch gekennzeichnet, daß** der Gehalt an R₂O niedriger als 18% ist.

5. Zusammensetzung nach einem der Ansprüche 1 bis 4, **dadurch gekennzeichnet, daß** sie frei von SrO ist.

6. Zusammensetzung nach einem der Ansprüche 1 bis 5, **dadurch gekennzeichnet, daß** sie eine Differenz zwischen der Glasfaserverformungstemperatur (T_{LOG η=3}) und der Liquidustemperatur (T_{liq}) aufweist, die mindestens gleich 60°C, vorzugsweise mindestens gleich 80°C ist.

7. Zusammensetzung nach Anspruch 6, **dadurch gekennzeichnet, daß** die Verformungstemperatur höchstens gleich 1320°C und vorzugsweise niedriger oder gleich 1310°C ist.

8. Glasfaser zur Verstärkung von anorganischen oder organischen Materialien, **dadurch gekennzeichnet, daß** sie aus einer Glaszusammensetzung nach einem der Ansprüche 1 bis 7 erhalten wird.

9. Verwendung von Glasfasern nach Anspruch 8 für die Verstärkung von anorganischen Materialien, insbesondere stark basischen Materialien wie Zementmaterialien, und von organischen Materialien, insbesondere Kunststoffen.

10. Gemisch aus Glasfasern und anorganischen oder organischen Materialien, **dadurch gekennzeichnet, daß** es Glasfasern nach Anspruch 8 enthält.

11. Gemisch nach Anspruch 10, **dadurch gekennzeichnet, daß** das anorganische Material unter den Zementmaterialien wie Zement, Beton, Mörtel, Gips, Schlacke, und Zusammensetzungen, welche aus der Reaktion zwischen Kalk, Kieselsäure und Wasser entstehen, ausgewählt ist.

12. Gemisch nach Anspruch 10, **dadurch gekennzeichnet, daß** das organische Material aus thermoplastischen oder wärmehärtbaren Kunststoffmaterialien ausgewählt ist.

13. Gemisch nach Anspruch 12, **dadurch gekennzeichnet, daß** das thermoplastische Material unter den Polyolefinen, den Polyestern, den Polyamiden, den Polyurethanen und deren Mischungen ausgewählt ist.

14. Gemisch nach Anspruch 12, **dadurch gekennzeichnet, daß** das wärmehärtbare Material unter den Polyestern, den Phenolharzen, den Epoxidharzen, den Polyacrylen und deren Mischungen ausgewählt ist.
